# EUROPEAN PATENT APPLICATION

(11) **EP 4 137 336 A1**
(43) Date of publication of application: **22.02.2023**
(21) Application number: 22188478.6
(22) Date of filing: 03.08.2022
(51) Int. Cl.: B60G 17/08, F04B 17/03

(54) **DAMPER ASSEMBLY AND SYRINGE PUMP**

(30) Priority: 18.08.2021 US 202117405250
(71) Applicant: DRiV Automotive Inc., Lake Forest, IL 60045 (US)
(72) Inventor: MANGELSCHOTS, Gert, Lake Forest, 60045 (US); SLOOTMAEKERS, Stein, Lake Forest, 60045 (US)
(74) Representative: Wagner & Geyer

(57) **Abstract**

A system for use in a vehicle, the system includes at least two hydraulic damper assemblies. The system includes a syringe pump in fluid communication with the hydraulic damper assemblies. The syringe pump includes a barrel having an opening. The syringe pump includes a plunger slidable within the barrel in a first direction that moves hydraulic fluid into the barrel via the opening and in a second direction that moves hydraulic out of the barrel via the opening. The system includes an actuator supported within the barrel and operatively coupled to the plunger.

## Description

### BACKGROUND

Hydraulic dampers are typically used in automotive suspension systems or other suspension systems to control movement of wheels of a vehicle relative to a body of the vehicle. In order to control movement, dampers are generally connected between the sprung (body) and the unsprung (suspension/drivetrain) masses of the vehicle.

The hydraulic dampers may be connected to a hydraulic fluid system that provides hydraulic fluid to the hydraulic dampers. The hydraulic fluid system typically includes a reservoir tank that stores hydraulic fluid and a fluid pump, such as a reciprocating pump or a vibration pump, that draws hydraulic fluid from the reservoir tank for delivery to the hydraulic dampers, e.g., via hydraulic fluid lines connecting the reservoir tank to an inlet of the pump and hydraulic fluid lines connecting an outlet of the pump to the hydraulic dampers.

### BRIEF DESCRIPTION OF THE DRAWINGS

Figure 1 is a perspective view of a vehicle including a hydraulic suspension system having a syringe pump.
Figure 2 is a cross-section view of the syringe pump.
Figure 2A is a close-up of a portion of the cross-section view of Figure 2.
Figure 3 is a cross section view of the syringe pump.
Figure 4 is a schematic of components of the hydraulic suspension system.
Figure 5 is a block diagram of components of the vehicle.

### DETAILED DESCRIPTION

A hydraulic suspension system for use in a vehicle to control movement of wheels relative to a body includes at least two hydraulic damper assemblies. The suspension system includes a syringe pump in fluid communication with the hydraulic damper assemblies. The syringe pump includes a barrel having an opening. The syringe pump includes a plunger slidable within the barrel in a first direction that moves hydraulic fluid into the barrel via the opening. The plunger is slidable in a second direction that moves hydraulic out of the barrel via the opening. The hydraulic suspension system includes an actuator supported within the barrel and operatively coupled to the plunger.

The syringe pump of the hydraulic suspension system provides increased packaging and cost efficiencies, e.g., requires less components than conventional hydraulic suspension systems. As one example, the syringe pump replaces and eliminates the necessity for the hydraulic suspension system to include a conventional reservoir tank and reciprocating or vibration pump connected thereto.

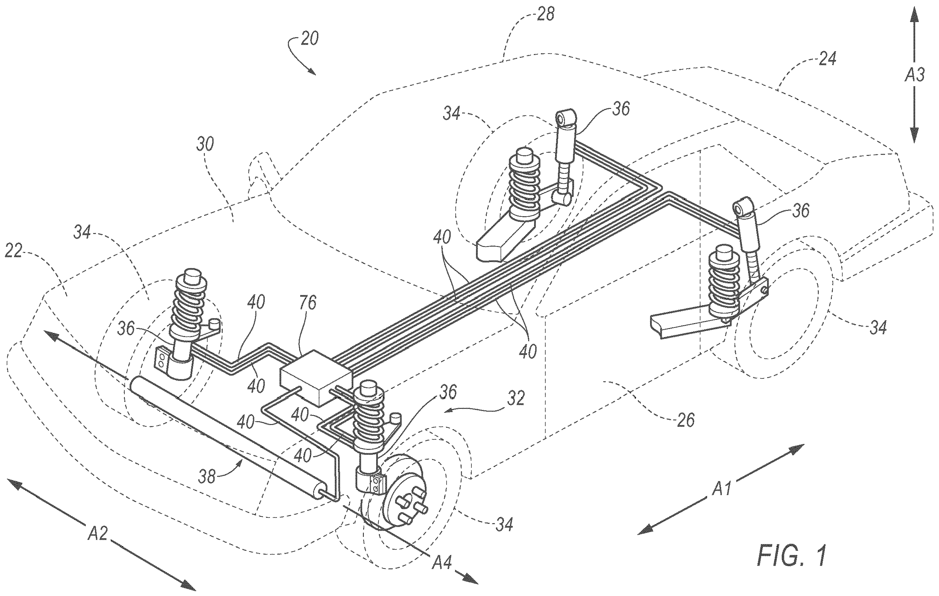

With reference to Figure 1, where like reference numbers indicate like elements throughout the several views, an exemplary vehicle 20 is shown.

The vehicle 20 may be any suitable type of ground vehicle, e.g., a passenger or commercial automobile such as a sedan, a coupe, a truck, a sport utility, a crossover, a van, a minivan, a taxi, a bus, etc.

In the present application, relative vehicular orientations and directions by way of example, top, bottom, front, rear, outboard, inboard, inward, outward, lateral, left, right, etc. is from the perspective of an occupant seated in the vehicle 20 facing forward, e.g., toward a forward instrument panel and/or forward windshield of the vehicle 20. The forward direction of the vehicle 20 is the direction of movement of the vehicle 20 when the vehicle 20 is engaged in forward drive with wheels 34 of the vehicle 20 straight. Orientations and directions relative to the assembly are given related to when the assembly is supported by the vehicle 20 as described below and shown in the Figures.

The vehicle 20 defines a longitudinal axis A1, e.g., extending between a front end 22 and a rear end 24 of the vehicle 20. The vehicle 20 defines a lateral axis A2, e.g., extending between a left side 26 and a right side 28 of the vehicle 20. The vehicle 20 defines a vertical axis A3, e.g., extending between a top and a bottom of the vehicle 20. The longitudinal axis A1, the lateral axis A2, and the vertical axis A3 are perpendicular to each other.

The vehicle 20 includes a vehicle frame. The vehicle frame may be of a unibody construction in which the frame is unitary with a vehicle body 30, e.g., including frame rails, pillars, roof rails, etc. As another example, the body 30 and frame may have a body-on-frame construction also referred to as a cab-on-frame construction in which the body 30 and frame are separate components, i.e., are modular, and the body 30 is supported on and affixed to the frame. Alternatively, the frame and body 30 may have any suitable construction. The frame and body 30 may be of any suitable material, for example, steel, aluminum, and/or fiber-reinforced plastic, etc.

The vehicle 20 includes a suspension system 32 that controls vertical movement of the wheels 34 of the vehicle 20 relative to the body 30 of the vehicle 20, e.g., to absorb impact of bumps, potholes and other elevation changes of a road surface encountered by the vehicle 20, to adjust a ride height of the vehicle 20, to limit sway (e.g., lateral roll) of the body 30, etc. The suspension system 32 may include damper assemblies 36, springs, etc. The damper assemblies 36 are typically used in conjunction with the other components of the suspension system 32 to control movement of the wheels 34 of the vehicle 20 relative to the body 30 of the vehicle 20. In order to control movement, damper assemblies 36 are operatively connected between the body 30 and the wheels 34 the vehicle 20. The vehicle 20 may include, for example, a separate damper assembly 36 at each wheel 34. Each damper assembly 36 may be coupled with a coil spring.

The damper assemblies 36 control movement of respective wheels 34 of the vehicle 20 by limiting flow of hydraulic fluid into, out of, and/or between various chambers of the damper assembly 36, e.g., into, out of, and/or between a compression chamber and a rebound chamber. Fluid movement is caused by movement of a piston within a pressure tube of the damper assembly 36, e.g., when the damper assembly 36 is moved toward the compressed position or the extended position.

The vehicle 20, e.g., the suspension system 32, may be free from having an anti-sway bar connecting the body 30 and one of the wheels 34 at the right side 28 and one of the wheels 34 at left side 26. The suspension system 32 may compensate for the lack of the anti-sway bar via selectively controlling hydraulic fluid flow to the damper assemblies 36, e.g., as described below.

The suspension system 32 includes a syringe pump 38 that provides pressure to hydraulic fluid used with the damper assemblies 36. The syringe pump 38 is in fluid communication with the damper assemblies 36 such that hydraulic fluid may flow from the syringe pump 38 to the damper assemblies 36. For example, a plurality of hydraulic lines 40 may connect the syringe pump 38 to the damper assemblies 36.

The syringe pump 38 stores reserve hydraulic fluid, e.g., in a pressure chamber 42 of the syringe pump 38. Fluid from the syringe pump 38 may be provided to the damper assemblies 36, e.g., without drawing such fluid from a reservoir tank. In other words, the suspension system 32 may be free from having a reservoir tank in fluid communication with the syringe pump 38.

The syringe pump 38 may be elongated along the lateral axis A2, i.e., the syringe pump 38 may be longer along the lateral axis A2 than along the longitudinal axis A1 and the vertical axis A3. The syringe pump 38 may be cylindrical. The syringe pump 38 may be supported by, e.g., fixed to, the body 30. The syringe pump 38 may be supported at the front end 22 of the body 30, e.g., at a volume typically occupied by an anti-sway bar.

The syringe pump 38 can include a barrel 44 that defines the pressure chamber 42. The barrel 44 can store and pressurize hydraulic fluid in the pressure chamber 42. The barrel 44 may be elongated along the lateral axis A2. For example, the barrel 44 may be a hollow tube surrounding the pressure chamber 42. The barrel 44 may include opposing ends 46 spaced from each other along a pump axis A4. The pump axis A4 may be parallel to the lateral axis A2. The ends 46 may be closed. The barrel 44 may include an opening 48 that enables fluid flow into or out of the pressure chamber 42. The opening 48 may be, for example, at one of the ends 46. The opening 48 may be coupled to one of the hydraulic lines 40, e.g., such that fluid may flow into and out of the pressure chamber 42 to and from the hydraulic line 40 via the opening 48.

The syringe pump 38 can include an inner barrel 50. The inner barrel 50 may be, for example, a hollow tube. The inner barrel 50 may be supported by within the barrel 44. The inner barrel 50 may be fixed to the barrel 44, e.g., to one of the ends 46 of the barrel 44. The barrel 44 and the inner barrel 50 may be concentric on the pump axis A4. The inner barrel 50 may be elongated along the lateral axis A2. The inner barrel 50 may include a second end 52, e.g., enclosing the hollow tube. The second end 52 may include a second opening 54.

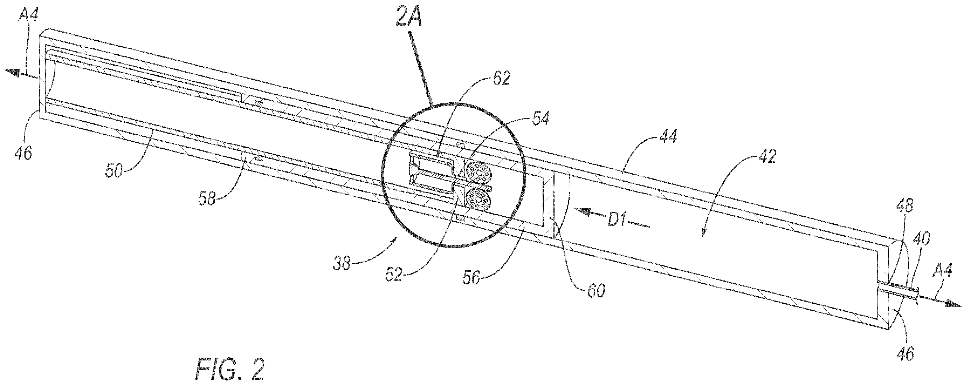

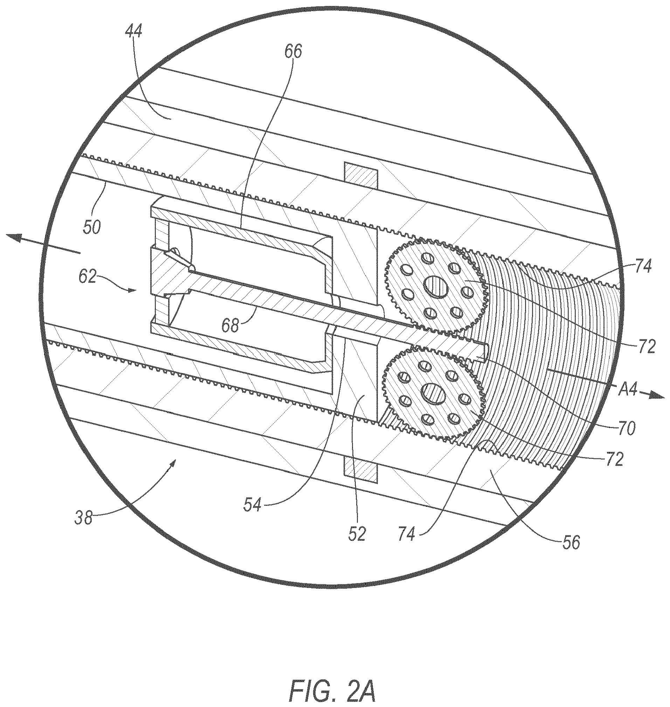

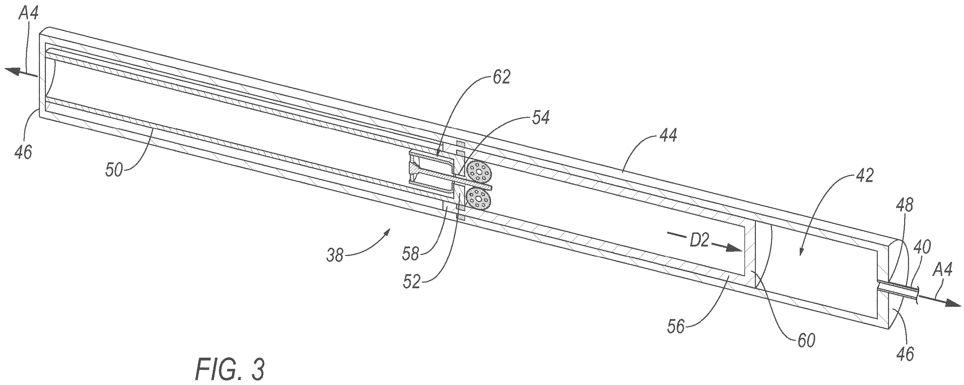

The syringe pump 38 includes a plunger 56 slidable within the barrel 44. Movement of the plunger 56 varies volume of the pressure chamber 42. With reference to Figure 2, movement of the plunger 56 within the barrel 44 in a first direction D1 increases the volume of the pressure chamber 42 and may move hydraulic fluid into the barrel 44 via the opening 48, e.g., from the hydraulic line 40. Movement of the plunger 56 in the first direction D1 decreases pressure in the pressure chamber 42. The first direction D1 may be away from the opening 48. With reference to Figure 3, movement of the plunger 56 in a second direction D2 decreases the volume and moves hydraulic fluid of the barrel 44 via the opening 48, e.g., into the hydraulic line 40. Movement of the plunger 56 in the second direction D2 may increase pressure in the pressure chamber 42. The second direction D2 is opposite the first direction D1. For example, the second direction D2 may be toward from the opening 48.

The plunger 56 may be, for example, a hollow tube. The plunger 56 may include an open end 58 and a closed end 60 spaced from each other along the pump axis A4. The plunger 56 may be elongated along the lateral axis A2. The pressure chamber 42 may be between the closed end 60 of the plunger 56 and the end 46 of the barrel 44 having the opening 48. The plunger 56 may be supported between the inner barrel 50 and the barrel 44. For example, the plunger 56 may define an outer diameter that is smaller than an inner diameter of the barrel 44 and an inner diameter that is larger than an outer diameter of the inner barrel 50. The plunger 56 may be concentric with the barrel 44 and the inner barrel 50 on the pump axis A4. The inner barrel 50 may extend from within the plunger 56 to outside the plunger 56, e.g., through the open end 58.

The syringe pump 38 may include an actuator 62 operatively coupled to the plunger 56, i.e., such that actuation of actuator 62 moves the plunger 56 in the first direction D1 or the second direction D2. The actuator 62 may actuate to move the plunger 56 in the first direction D1 or the second direction D2 in response to receiving a command from a computer 64. The command may specify the first direction D1 or the second direction D2.

With reference to Figure 2A, the actuator 62 may include a motor 66 or other suitable electro-mechanical structure coupled to the plunger 56. Rotation of a driveshaft 68 of the motor 66 in one direction may move the plunger 56 in the first direction D1 and rotation of the driveshaft 68 in an opposite direction may move the plunger 56 in the second direction D2. For example, a worm 70 may be operatively coupled to the motor 66 such that rotation of the driveshaft 68 rotates the worm 70. The worm 70 may include a spiral thread. The worm 70 may be fixed to the driveshaft 68. One or more worm gears 72 may be engaged with the worm 70, i.e., such that rotation of the worm 70 rotates the worm gears 72. For example, the worm gears 72 may include teeth meshed with the spiral thread of the worm 70. The worm gears 72 may be engaged with one or more racks 74 fixed to the plunger 56, e.g., the teeth of the worm gears 72 may be meshed with teeth of the racks 74. Rotation of the worm gears 72 moves the racks 74 and the plunger 56 linearly in the first direction D1 or the second direction D2. The rack 74 may be at an inner surface of the plunger 56. The racks 74 and the plunger 56 may be unitary. Unitary means a single, uniform piece of material with no seams, joints, fasteners, or adhesives holding it together, i.e., formed together simultaneously as a single continuous unit, e.g., by machining from a unitary blank, molding, forging, casting, etc. Non-unitary components, in contrast, are formed separately and subsequently assembled, e.g., by threaded engagement, welding, etc.

The actuator 62 may be supported within the barrel 44, e.g., within the plunger 56 and/or the inner barrel 50. For example, the motor 66 may be fixed within the inner barrel 50 and at the second end 52. The motor 66 may be concentric with the barrel 44, the inner barrel 50, and/or the plunger 56. The driveshaft 68 may extend out of the inner barrel 50, e.g., through the second opening 54 of the second end 52 of the inner barrel 50. The worm 70 and worm gears 72 may be within the plunger 56. The second end 52 of the inner barrel 50 may be between the motor 66 and the worm 70 and the worm gears 72 along the pump axis A4. The closed end 60 of the plunger 56 may be between the pressure chamber 42 and the worm 70 and the worm gears 72 along the pump axis A4.

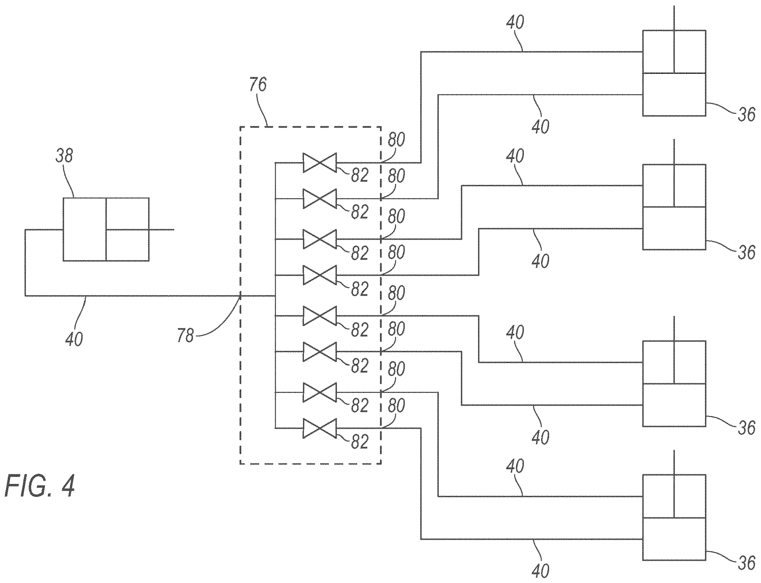

With reference to Figures 1 and 4, the suspension system 32 may include a manifold 76. The manifold 76 is fluidly connected between the syringe pump 38 and the damper assemblies 36, e.g., via the hydraulic lines 40. The manifold 76 selectively provides hydraulic fluid from the syringe pump 38 to the various damper assemblies 36. For example, the manifold 76 may provide hydraulic fluid from the syringe pump 38 to one or more of the damper assemblies 36 and not to others. The manifold 76 may include a pump port 78 connected to the syringe pump 38, e.g., via one of the hydraulic lines 40. The manifold 76 may include a plurality of damper ports 80, each connected to a respective one of the damper assemblies 36, e.g., via the hydraulic lines 40. The pump port 78 is in fluid communication with the damper ports 80, i.e., such that hydraulic fluid can flow therebetween.

The manifold 76 may include one or more valves 82. The valves 82 control fluid flow from the syringe pump 38 to the damper assemblies 36. Each valve 82 moves between an open position that permits fluid flow and a closed position that inhibits fluid flow. One of the valves 82 may be at each of damper ports 80, e.g., permitting or inhibiting fluid flow between the syringe pump 38 and the respective damper assemblies 36. The valve 82 may include solenoids and/or other suitable structure, e.g., as conventionally known, for moving the respective valve 82 from the closed position to the open position, or vice versa. The valves 82 may move from the closed position to the open position, or vice versa, in response to a command from the computer 64.

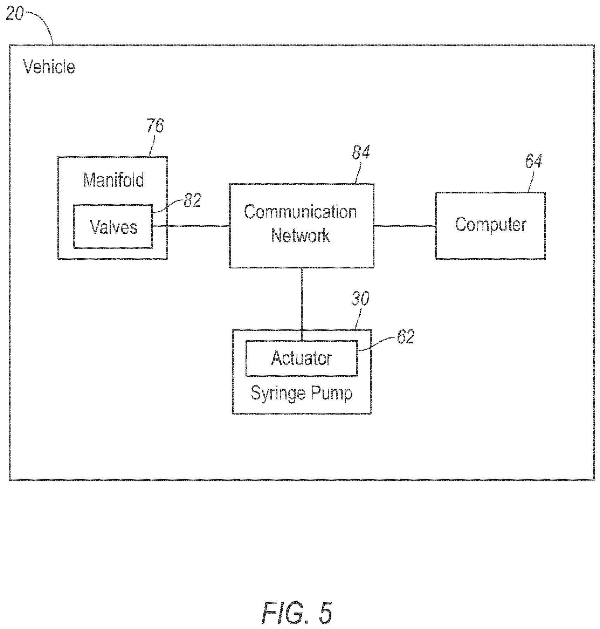

With reference to Figure 5, the computer 64 includes a processor and a memory. The memory includes one or more forms of computer readable media, and stores instructions executable by the computer 64 for performing various operations, including as disclosed herein. For example, the computer 64 can be a generic computer 64 with a processor and memory as described above and/or may include an electronic control unit ECU or controller for a specific function or set of functions, and/or a dedicated electronic circuit including an ASIC that is manufactured for a particular operation, e.g., an ASIC for processing sensor data and/or communicating the sensor data. In another example, computer 64 may include an FPGA (Field-Programmable Gate Array) which is an integrated circuit manufactured to be configurable by a user. Typically, a hardware description language such as VHDL (Very High Speed Integrated Circuit Hardware Description Language) is used in electronic design automation to describe digital and mixed-signal systems such as FPGA and ASIC. For example, an ASIC is manufactured based on VHDL programming provided pre-manufacturing, whereas logical components inside an FPGA may be configured based on VHDL programming, e.g., stored in a memory electrically connected to the FPGA circuit. In some examples, a combination of processor(s), ASIC(s), and/or FPGA circuits may be included in the computer 64. The memory can be of any type, e.g., hard disk drives, solid state drives, servers, or any volatile or non-volatile media. The memory can store the collected data sent from sensors. The memory can be a separate device from the computer 64, and the computer 64 can retrieve information stored by the memory via a network in the vehicle 20, e.g., over a CAN bus, a wireless network, etc. Alternatively or additionally, the memory can be part of the computer 64, e.g., as a memory of the computer 64.

The computer 64 is generally arranged for communications on a vehicle communication network 84 that can include a bus in the vehicle 20 such as a controller area network CAN or the like, and/or other wired and/or wireless mechanisms. The computer 64 may be in electrical communication with the syringe pump 38 and the manifold 76 via the communication network 84. Alternatively or additionally, in cases where the computer 64 actually comprises a plurality of devices, the vehicle communication network 84 may be used for communications between devices represented as the computer 64 in this disclosure. Further, various controllers and/or sensors may provide data to the computer 64 via the vehicle communication network 84.

The computer 64 may be programmed to, i.e., the memory includes instructions executable by the processor to, to decrease hydraulic pressure in one or more of the hydraulic damper assemblies 36, e.g., by commanding the actuator 62 of the syringe pump 38 to move the plunger 56 in the first direction D1. The computer 64 can increase hydraulic pressure in the hydraulic damper assemblies 36, e.g., by commanding the actuator 62 to move the plunger 56 in the second direction D2. The computer 64 may command the actuator 62, for example, by providing a specified voltage to the motor 66. The voltage may cause rotation of the driveshaft 68 in one direction or the other, e.g., depending on a polarity of the voltage.

The computer 64 may be programmed to selectively command the valves 82 to the open position and the closed position. For example, the computer 64 may send one or more commands via the communication network specifying which valves 82 (if any) should be open and which valves 82 (if any) should be closed.

The computer 64 may be programmed to command the actuator 62 and the manifold 76 to individually increase or decrease hydraulic pressure at one or more specific hydraulic damper assemblies 36 of the hydraulic damper assemblies 36. For example, the computer 64 may first open valves 82 connected to damper assemblies 36 at the right side 28 of the vehicle 20 and close valves and valves 82 connected to damper assemblies 36 at the left side 26 of the vehicle 20. The computer 64 may then command the actuator 62 to increase or decrease hydraulic pressure provided by the syringe pump 38, thereby increasing or decreasing hydraulic pressure provided to the damper assemblies 36 at the right side 28 connected via the open valves 82. Increasing pressure provided at the right side 28 (relative to the left side 26) may reduce roll of the body 30, e.g., when executing a left turn and compensating for the vehicle 20 being free from having an anti-sway bar.

Computer executable instructions may be compiled or interpreted from computer programs created using a variety of programming languages and/or technologies, including, without limitation, and either alone or in combination, Java , C, C , Visual Basic, Java Script, Perl, HTML, etc. In general, a processor e.g., a microprocessor receives instructions, e.g., from a memory, a computer readable medium, etc., and executes these instructions, thereby performing one or more processes, including one or more of the processes described herein. Such instructions and other data may be stored and transmitted using a variety of computer readable media. A file in a networked device is generally a collection of data stored on a computer readable medium, such as a storage medium, a random access memory, etc. A computer readable medium includes any medium that participates in providing data e.g., instructions, which may be read by a computer. Such a medium may take many forms, including, but not limited to, non-volatile media and volatile media. Instructions may be transmitted by one or more transmission media, including fiber optics, wires, wireless communication, including the internals that comprise a system bus coupled to a processor of a computer. Common forms of computer-readable media include, for example, RAM, a PROM, an EPROM, a FLASH-EEPROM, any other memory chip or cartridge, or any other medium from which a computer can read.

The term "exemplary" is used herein in the sense of signifying an example, e.g., a reference to an "exemplary widget" should be read as simply referring to an example of a widget.

Use of in response to and upon determining indicates a causal relationship, not merely a temporal relationship.

The disclosure has been described in an illustrative manner, and it is to be understood that the terminology which has been used is intended to be in the nature of words of description rather than of limitation. Many modifications and variations of the present disclosure are possible in light of the above teachings, and the disclosure may be practiced otherwise than as specifically described.

## Claims

1. A system for use in a vehicle, the system comprising:
at least two hydraulic damper assemblies;
a syringe pump in fluid communication with the hydraulic damper assemblies, the syringe pump including a barrel having an opening, and including a plunger slidable within the barrel in a first direction that moves hydraulic fluid into the barrel via the opening and in a second direction that moves hydraulic out of the barrel via the opening; and
an actuator supported within the barrel and operatively coupled to the plunger.

2. The system of claim 1, further comprising a manifold fluidly connected between the syringe pump and the hydraulic damper assemblies.

3. The system of claim 1, wherein the actuator includes a motor concentric with the barrel.

4. The system of claim 1, wherein the plunger is hollow, and the actuator is supported within the plunger.

5. The system of claim 1, wherein the syringe pump includes an inner barrel, the plunger supported between the inner barrel and the barrel.

6. The system of claim 5, wherein the actuator includes a motor supported within the inner barrel and a driveshaft that extends out of the inner barrel.

7. The system of claim 5, wherein the barrel, the plunger, and the inner barrel are elongated along an axis, and the barrel, the plunger, and the inner barrel are concentric on the axis.

8. The system of any of claims 1-7, wherein the actuator includes a worm operatively coupled to a motor and a worm gear engaged with the worm, and wherein the plunger includes a rack engaged with the worm gear.

9. A vehicle, comprising:
a body;
a wheel;
a hydraulic damper assembly operatively connected between the body and the wheel;
a syringe pump in fluid communication with the hydraulic damper assembly, the syringe pump including a barrel having an opening and elongated along a vehicle-lateral axis, and having a plunger slidable within the barrel in a first direction that moves hydraulic fluid into the barrel via the opening and in a second direction that moves hydraulic out of the barrel via the opening; and
an actuator operatively coupled to the plunger.

10. The vehicle of claim 9, wherein the body includes a front end, and the syringe pump is supported at the front end.

11. The vehicle of claim 9, wherein the syringe pump includes an inner barrel, the plunger supported between the inner barrel and the barrel.

12. The vehicle of claim 9, wherein the actuator includes a worm operatively coupled to a motor and a worm gear engaged with the worm, and the plunger includes a rack engaged with the worm gear.

13. The vehicle of any of claims 9-12, further comprising a second wheel and a second hydraulic damper assembly in fluid communication with the syringe pump and operatively connected between the body and the second wheel, and further comprising a manifold fluidly connected between the syringe pump and the hydraulic damper assembly and the second hydraulic damper assembly, the manifold including at least one valve that controls fluid flow from the syringe pump to the hydraulic damper assembly and the second hydraulic damper assembly.

14. The vehicle of claim 13, further comprising a computer programmed to command the actuator and the manifold to individually increase or decrease hydraulic pressure at the hydraulic damper assembly and the second hydraulic damper assembly.

15. The vehicle of claim 13, wherein the wheel is at a right side of the body and the second wheel is at a left side of the body, and wherein the vehicle is free from having an anti-sway bar connecting the body and the wheel and the second wheel
